# EUROPEAN PATENT SPECIFICATION

(11) **EP 3 433 662 B1**
(45) Date of publication and mention of the grant of the patent: **04.12.2024**
(21) Application number: 17710291.0
(22) Date of filing: 14.03.2017
(51) Int. Cl.: G02B 19/00, G02B 27/09, F21S 41/141, F21S 41/143, F21S 41/24, F21S 41/25, F21S 41/32, F21S 41/43, F21S 41/27, F21S 41/20, F21S 41/365

(54) **LIGHTING ARRANGEMENT**
LEUCHTANORDNUNG
DISPOSITIF D'ÉCLAIRAGE

(30) Priority: 21.03.2016 EP 16161324
(43) Date of publication of application: 30.01.2019
(73) Proprietor: Lumileds LLC, San Jose, CA 95131 (US)
(72) Inventor: SPINGER, Benno, 52068 Aachen (DE); TIMINGER, Andreas, 52068 Aachen (DE)
(74) Representative: Cohausz & Florack
(86) International application number: PCT/EP2017/055936
(87) International publication number: WO 2017/162474

(56) References cited:
- EP-A1- 2 703 852
- EP-B1- 2 327 927
- DE-A1- 10 252 228
- DE-A1- 102008 045 765
- DE-A1- 102013 001 075
- US-A- 5 697 690
- US-A- 5 931 576
- US-A1- 2008 080 207
- US-A1- 2012 147 591
- US-A1- 2012 188 774

## Description

### FIELD OF THE INVENTION

The invention relates to a lighting arrangement. In particular, the invention relates to a lighting arrangement which may be used in a headlamp of a vehicle.

### BACKGROUND OF THE INVENTION

Different types of lighting arrangements are known which use optical elements such as collimators, reflectors and/or lenses to transform light emitted from a light source to a desired illumination beam pattern.

EP 2 327 927 B1 describes a lens element for a light source, in particular for an LED. The lens element comprises a body of light conducting material. The body conducts portions of light originating from the light source. Portions of the light are reflected as a consequence of total reflection at boundary surfaces of the body.

DE 10 2008 045 765 A1 refers to a headlight with an optical element with a base section and a head section, where a lower side of the base section runs along a light beam direction before a light source i.e. LED, below a vertical opening angle.

US 5 697 690 A discloses an illuminating device for vehicles in which a light conductor made of light transmissive material having a predetermined light refractive index is placed between an outgoing light end of an optical cable and an incident light end of a lens body.

US 5,931,576 A refers to an headlamp for a vehicle including a holder for a light-distribution optical fiber of the type that has an output end emanating light of known spatial-intensity distribution, an optical coupler that has an input end adjacent the holder and includes a plurality of elements, each of which is positioned to receive light from a selected area of the light of known spatial intensity distribution and to alter the intensity or spatial distribution of that light to provide a predetermined spatial intensity distribution at an output of said coupler, and a projection lens to project the predetermined spatial intensity distribution to a desired illumination pattern.

US 2012/0188774 A1 discloses a lighting unit including an LED light source, and a lens body light exiting surface greater in width than in thickness. The lens body can include a first optical system, a second optical system, and a third optical system.

### SUMMARY OF THE INVENTION

It may be considered an object to propose a lighting arrangement to achieve a desired illumination beam pattern suited for a vehicle headlamp, in particular from a compact light source.

According to an aspect of the invention, a lighting arrangement according to claim 1 is proposed. Dependent claims refer to preferred embodiments.

The lighting arrangement according to the invention includes a light source and a beam shaping arrangement with a light input portion and a light output portion. Light from the light source is received at the light input portion and emitted as a shaped beam at the light output portion. The light input portion is a light input surface, and the light output portion may be a light output area or surface. A forward direction may be defined from the light input portion into the direction of the light output portion, e.g. from a center of a light input surface to a center of a light output surface.

As will become apparent in the following description, and in particular from the preferred embodiments of the invention, the beam shaping arrangement may have several different embodiments, and may include one or more types of optical elements to guide, shape, reflect, and/or otherwise optically modify the light from the light input portion before it is emitted at the light output portion.

In the claims and following description, reference will be made to dimensions and/or directions, such as a height direction and lateral directions. These directions may be understood relative to the above defined forward direction being arranged at least substantially horizontally. While an at least generally horizontal arrangement will be the preferred orientation in operation of the lighting arrangement, for example in a vehicle head lamp, the skilled person will understand that there may be situations or uses where the lighting arrangement can be oriented differently. Thus, reference to the above directions is only intended to clarify the relative arrangement and should not be understood as limiting the orientation in which the lighting arrangement may be operated.

The beam shaping arrangement is disposed to divide light from the light input portion into at least two separate beam portions. These include at least a first and a second beam portion separated in a height direction. Thus, the first and second beam portion may be distinguished in that they follow different corresponding beam paths arranged at different height within the beam shaping arrangement, and/or that they are directed under different angles of inclination relative to the forward direction. For example, a dividing angle of inclination may be defined, e.g. relative to the horizontal direction, such that the first beam portion may include light emitted under angles of inclination greater than the dividing angle of inclination, and the second beam portion may include light emitted under angles of inclination less than the separating angle of inclination.

The beam shaping arrangement is disposed such that the first and second beam portions are led to converge in the height direction at or towards said light output portion. In this context, the term "converge" is not intended to designate the spread of beam directions within the first and second beam portions, but should be understood as referring to the fact that the first and second beam portions are brought together in the height direction at the light output portion. Thus, the first and second beam portions, which are separated in the height direction at least in a portion of the beam shaping arrangement, are again brought together at the light output portion. As will be apparent in connection with preferred embodiments, the first and second beam portions may be arranged at the light output portion at at least substantially the same height.

According to an aspect of the invention, the first and second beam portions are however differently directed into lateral directions, relative to the forward direction. At the light output portion, the second beam portion is arranged and/or directed laterally further outward relative to the first beam portion. The term "laterally outward" may be understood relative to a center of the light output portion.

At the light output portion, the first and second beam portions are thus emitted laterally offset from each other.

Thus, the beam shaping arrangement may achieve a beam to be emitted at the light output portion which may be wider in at least one, preferably both lateral directions than the input beam received at the light input portion. Such a broadened beam is particularly preferred for automotive front lighting. According to an underlying concept of the invention, such a broader beam is formed from two or more beam portions initially separated in the height direction. Thus, in the beam path from the light source up to the light output portion, a spread of emitted light in the height direction is transformed into a spread into lateral directions. The intensity distribution may thus be transformed to match the aperture of further optical elements, such as a projection lens. In this way, it is possible to obtain a wide output beam in a very efficient way.

In accordance with the widening of the output beam, the dimensions of the light output portion may be such that its lateral width corresponds to more than twice its height or thickness (measured at the thickest portion), preferably more than four times. The height of the light output portion may preferably be less than 10 times the height of the light input portion, further preferably less than 6 times. The width or lateral extension of the light output portion may preferably be more than 10 times the width of the light input portion, further preferably more than 12 times.

The general concept of the above described aspects of the invention of using height separated beam portions to obtain a laterally spread output beam pattern may be used in different embodiments and combinations, some of which will be further described below.

The first beam portion is a center beam, which is directed to a center portion of the light output portion. The second beam portion is a peripheral beam, directed to a peripheral portion of the light output portion, thus laterally further outward relative to the first beam portion.

In a particularly preferred embodiment, the peripheral beam may be directed to a first lateral side of the center portion, e.g. to the right, and at least one further beam portion may be directed to the second, opposite lateral side, e.g. to the left. Particularly, the arrangement may be at least substantially symmetrical with regard to the lateral directions. For example, while the first beam portion may be directed to the center portion of the light output portion, one or more peripheral beams may be directed to peripheral portions on one side, and the same number of peripheral beams may be directed to the opposite side of the center portion at the light output portion.

According to a further preferred embodiment, the first beam portion may be a first peripheral beam, which is directed to a first peripheral portion at the light output portion, and the second beam portion may be a second peripheral beam, directed to a second peripheral portion arranged laterally further outward relative to the first peripheral portion. Thus, the first and second beam portions, separated in height direction, may both be directed towards peripheral portions, however one further outward relative to the other. Thus, again, a broadened beam may be achieved.

In a particularly preferred embodiment, a first and a second peripheral portion may be arranged on a first lateral side of the light output portion, and further beam portions may be arranged on a second, opposite lateral side of the light output portion. The arrangement may preferably be at least substantially symmetrical. Thus, for example four peripheral portions may be provided, two to each lateral side.

In a particularly preferred embodiment, light may be divided into at least a first, second and third beam portion, separated in the height direction. The first beam portion may be a center beam directed to a center portion of the light output portion. The second beam portion may be a first peripheral beam directed to a first peripheral portion of the light output portion, and the third beam portion may be a second peripheral beam, directed to a second peripheral portion arranged laterally further outward relative to the first peripheral portion. As will be shown for preferred embodiments, a separation of at least three different beam portions in height may thus be used to achieve a particularly widely spread output beam. Also, for this embodiment, an at least substantially symmetrical arrangement is preferred, for example with the first and second peripheral portions arranged to one lateral direction of the center portion, and further beam portions arranged towards a second, opposite lateral side.

According to further preferred embodiments of the invention, the beam shaping arrangement may include at least one lateral reflection surface to reflect at least one of the beam portions into a lateral direction. This may be used to achieve the desired broadened beam in lateral direction. Particularly preferably, the beam shaping arrangement may include at least a first and a second lateral reflection surface. The first lateral reflection surface may be disposed to reflect one or more of the beam portions into a lateral direction towards the second lateral reflection surface, and the second lateral reflection surface may be disposed to direct the beam portion into a direction at least substantially parallel to the forward direction toward the light output portion. Thus, by twice reflecting at least one of the beam portions at the first and second lateral reflection surface, beams may be directed to peripheral portions of the light output portion while being oriented at least substantially parallel to the forward direction.

According to a preferred embodiment, at least one of the beam portions may be led within the beam shaping arrangement to first diverge from the forward direction in the height direction, and then converge toward the forward direction in the height direction. Again, the terms "converging" and "diverging" should not be understood as to refer to increased or reduced spread of the beam portion itself, but to designate the direction of the beam portion relative to the forward direction. According to the preferred embodiment, for example the first beam portion may be an upper beam portion, which within the beam shaping arrangement is first guided away from the forward direction in height direction, and is then guided back toward the forward direction at the light output portion.

For example, this may be achieved by a bridge member included in the beam shaping arrangement, for example a light guide. The bridge member may extend from the light input portion to the light output portion, and may include at least a first bridge member portion directed away from the forward direction into the height direction, and a second bridge member portion directed toward the forward direction in the height direction. In particular, the bridge member may be an arch shaped light guide.

Generally, for the output beam at the light output portion it is preferred that the first, second and any further beam portions are directed to be at least substantially parallel to the forward direction to form an illumination beam.

The illumination beam emitted from the light output portion may preferably be further projected by a projection lens. The projection lens may be used to image the light output portion. The light output portion may be shaped correspondingly, e.g. be of concave shape. At least one front edge of the light output portion may serve to achieve a light/dark boundary in the projected illumination beam. For use in automotive front lighting, at least one laterally extending front edge of the light output portion may include a first and a second edge portion adjacent to each other, which may both be at least substantially straight (or be shaped such that their images projected by a projection lens are at least substantially straight lines). In order to conform to intensity distributions desired for automotive front lighting, the first and second edge portions may be arranged inclined, e.g. at an angle to each other of 5-50°, preferably 15°.

The beam shaping arrangement may in principal be provided as an arrangement of separate optical elements, such as e.g. one or more collimators, one or more reflector surfaces, etc. The beam shaping arrangement includes a transparent body disposed to guide light from the light input portion in the interior of the body. The body includes reflection surfaces at which light may be reflected due to total internal reflection. As will become apparent in connection with preferred embodiments, the entire beam shaping arrangement may be comprised of a single transparent body. The body includes a central cavity forming reflection surfaces to separate different beam portions. The reflection surfaces are arranged to laterally deflect beam portions into the lateral directions. A light guide may be provided substantially parallel to the forward direction to pass over the cavity.

Generally, it is preferred that the beam shaping arrangement may be of overall flat shape. For example, it may have an extension in lateral direction which is more than twice of an extension in height direction.

These and other aspects of the invention will become apparent from and elucidated with reference to the embodiments described herein after.

### BRIEF DESCRIPTION OF THE DRAWINGS

- Fig. 1: shows a partly schematical top view of an embodiment of a lighting arrangement including first embodiment of a TIR body;
- Fig. 2: shows a side view of the lighting arrangement of fig. 1;
- Figs. 3-7: show a second embodiment of a TIR body in a perspective view, front view, top view, back view and side view;
- Figs. 8, 9: show the TIR body from fig. 3-7 in a top and side view with beam paths;
- Fig. 10: shows a perspective view of a third embodiment of a TIR body;
- Figs. 10a, 10b, 10c: show sectional views of the TIR body of fig. 10, the planes A, B and C in fig. 10 showing the position of the sections
- Fig. 11: shows a front view of the TIR body of fig. 10.

### DETAILED DESCRIPTION OF EMBODIMENTS

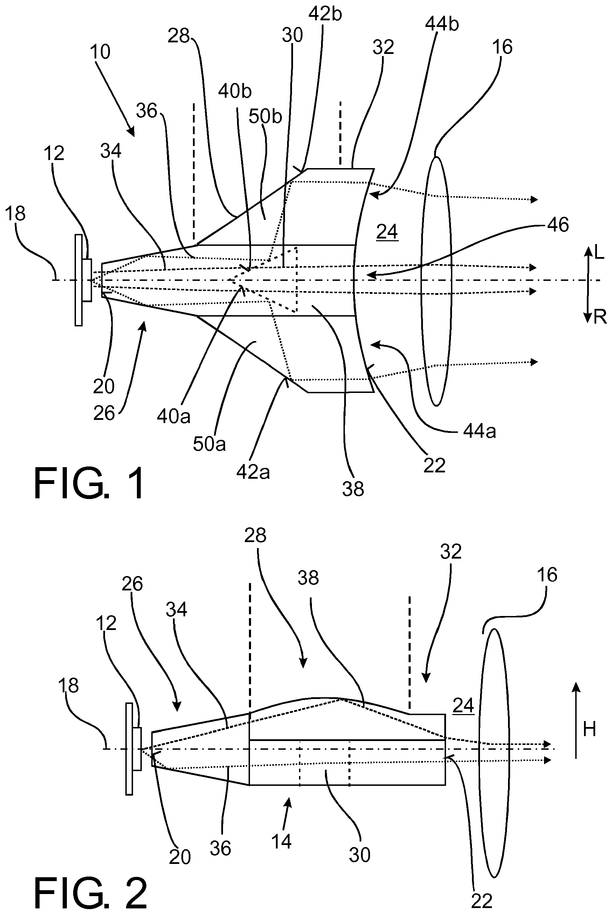

Fig. 1, 2 schematically show a lighting arrangement 10 in a top view and side view. The lighting arrangement includes an LED light source 12, a beam shaping arrangement which in the present example is constituted by a solid body 10 made out of transparent material acting as a TIR (total internal reflection) body, and a projection lens 16.

The lighting arrangement may be, for example, part of a headlamp of a motor vehicle.

Light emitted from the light emitting surface of the LED light source 12 enters the interior of the TIR body 14 at a light input surface 20 and is internally conducted and guided within the TIR body 14 to be emitted at a light output surface 22 thereof. As will be further explained below, the light intensity distribution emitted from the light emitting surface of the LED 12 as a Lambertian emitter is altered within the TIR body 14 such that a shaped illumination beam 24 is emitted at the light output surface 22 to be projected by the projection lens 16.

While the input beam of light received at the light input surface 20 of the TIR body 14 corresponds to the square shape of the light emitting surface of the LED 12, the shaped beam 24 is laterally widened, i.e. extended into lateral left and right directions as indicated L and R in fig. 1. The height direction H is indicated in fig. 2 for reference.

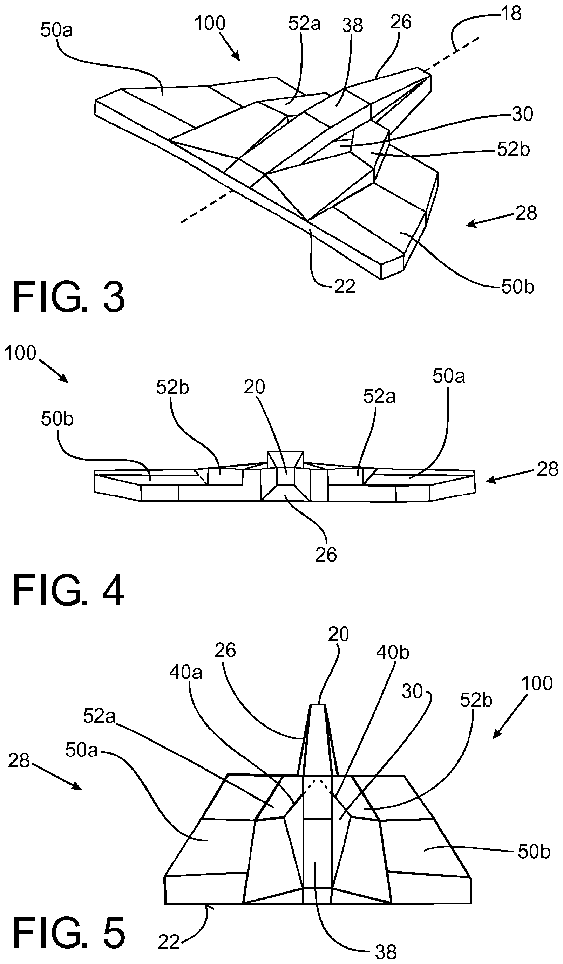

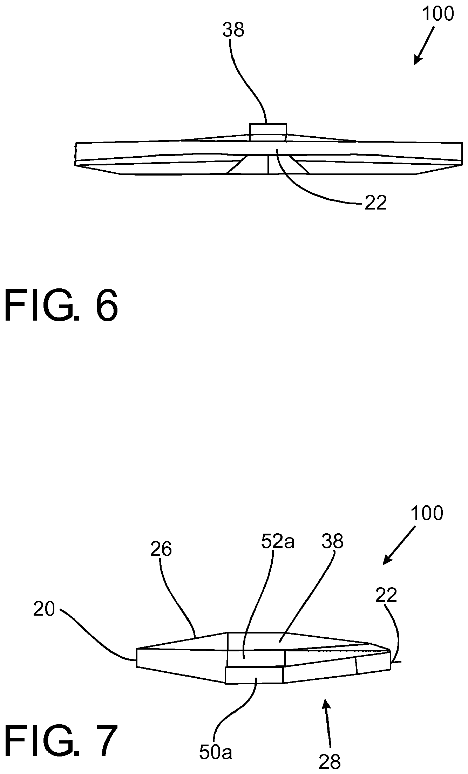

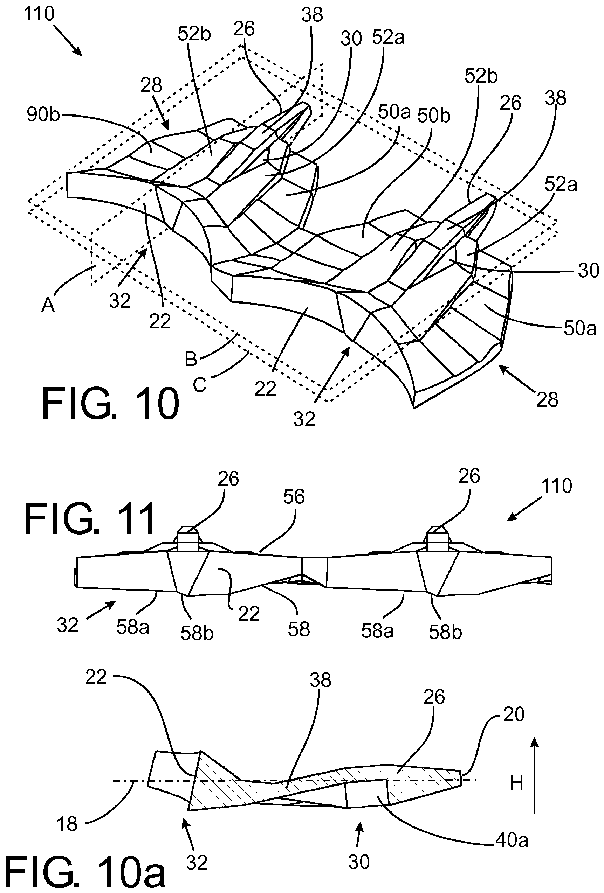

In the schematical example of fig. 1, fig. 2, a forward direction of the beam shaping arrangement may be defined by an optical axis 18 through the center of the LED 12, the center of the light input surface 20, the center of the light output surface 22 and the center of the projection lens 16. For more detailed embodiments, such as shown in fig. 3-11, these elements may not be exactly aligned, such that an optical axis may not be easily defined for the whole arrangement. However, a forward direction may still be defined through the center of the light input surface 20 and the light output surface 22, e.g. as shown in fig. 10a.

The TIR body 14, as shown in fig. 1, fig. 2, is formed in one piece. Three portions arranged one behind the other in the forward direction may be identified, namely an input collimator portion 26, a beam spreading portion 28 with a central cavity 30, and a lens adaptation portion 32. A separation of the three portions 26, 28, 32 is schematically designated in fig. 1, fig. 2 by vertical lines.

Exterior surfaces of the TIR body 14 can serve as reflection surfaces for light guided within the TIR body 14 if struck by light at an angle below the angle of total reflection. Using this effect, the TIR body 14 is shaped to achieve the desired shaped beam 24.

The collimator portion 26 is shaped as a cut-off pyramid with substantially square base. The light input surface 20 is square and corresponds to the size of the light emitting surface of the LED 12. From the light input surface 20, the input collimator portion 26 widens both laterally and vertically in the forward direction.

The lens adaptation portion 32 comprises the light output surface 22. In order to adapt to the lens 16, the light output surface 22 has concave shape.

The beam spreading portion 28 comprises left and right wing portions 50a, 50b to both lateral sides of the central cavity 30 and an arch shaped bridge portion 38 extending over the cavity 30.

The input beam of light at the light input surface 20 is divided into a center beam 34, shown in fig. 1, fig. 2 in dashed lines, and left and right peripheral beams 36, shown in dotted lines.

Figure 2 shows how the center beam 34 and the peripheral beams 36 are separated within the TIR body 14 in the height direction H. Light portions emitted upward form the central beam 34, whereas light portions emitted substantially horizontally or downward form the peripheral beams 36.

The center beam 34 is conducted within the bridge portion 38 arranged parallel to the optical axis 18 in the center of the beam spreading portion 28 of the TIR body 14. The bridge portion 38 is an arch shaped light guide for guiding the center beam 34 from the input collimator portion 26 to a center portion 46 of the light output surface 22 at the lens adaptation portion 32.

Left and right peripheral beams 36 are guided, as shown in figure 2, within the beam spreading portion 28 of the TIR body 14 below the bridge portion 38. The cavity 30 is formed like a wedge, its front edge being arranged on the optical axis 18 and two front surfaces 40a, 40b extending laterally from the front edge under an oblique angle to the optical axis 18. The front surfaces 40a, 40b reflect the peripheral beam 36 due to total internal reflection. The peripheral beam 36 is separated at the front edge of the cavity 30 into left and right peripheral beams reflected to both lateral sides.

Both peripheral beams 36 are again reflected at outer surfaces 42a, 42b, of the wing portions 50a, 50b. The surfaces 42a, 42b are also arranged at an oblique angle to the optical axis 18 such that, as shown in figure 1, the peripheral beams 36 at the light output surface 22 are directed substantially parallel to the optical axis, but pass through laterally peripheral portions 44a, 44b of the light output surface 22.

The resulting shaped beam 24 emitted at the light output surface 22 is thus composed of the center beam 34 emitted at the center portion 46 of the light output surface 22 and the peripheral beams 36 emitted at the laterally peripheral portions 44a, 44b thereof.

The resulting shaped beam 24 is thus laterally spread out over the width of the light output surface 22, thus substantially wider, in the example more than 15 times, compared to the square light emitting surface of the LED 12. In the height direction H, the resulting shaped beam 24 has roughly the same or only slightly larger extension compared to the LED 12.

Figure 3 shows a second embodiment of a TIR body 100 in a perspective view. Other views of the TIR body 100 are shown in figure 4-7. The TIR body 100 generally corresponds to the TIR body 10 according to the first embodiment. Similar or comparable parts thereof will be designated by like reference numerals.

The TIR body 100 comprises an input collimator portion 26 with a square light input surface 20, and a beam spreading portion 28 with wing portions 50a, 50b extending to both lateral sides of the forward direction 18. The beam spreading portion 28 includes a central cavity 30. A bridge portion 38 is arranged above the central cavity 30. In the example shown in figure 3-7, the TIR body 100 does not have a specially shaped lens adaptation portion with concave shape. The beam spreading portion 28 terminates in a plane light output surface 22.

The beam spreading portion 28 includes, arranged on top of the wing portions 50a, 50b, right and left top wing portions 52a, 52b.

The TIR body 100 is designed in the same way as the TIR body 10 according to the first embodiment to receive light from an LED light source 12 at the light input surface 20 and shape a laterally spread output beam 24 thereof by separating beam portions in height direction and guiding them towards different portions of the light output surface 22.

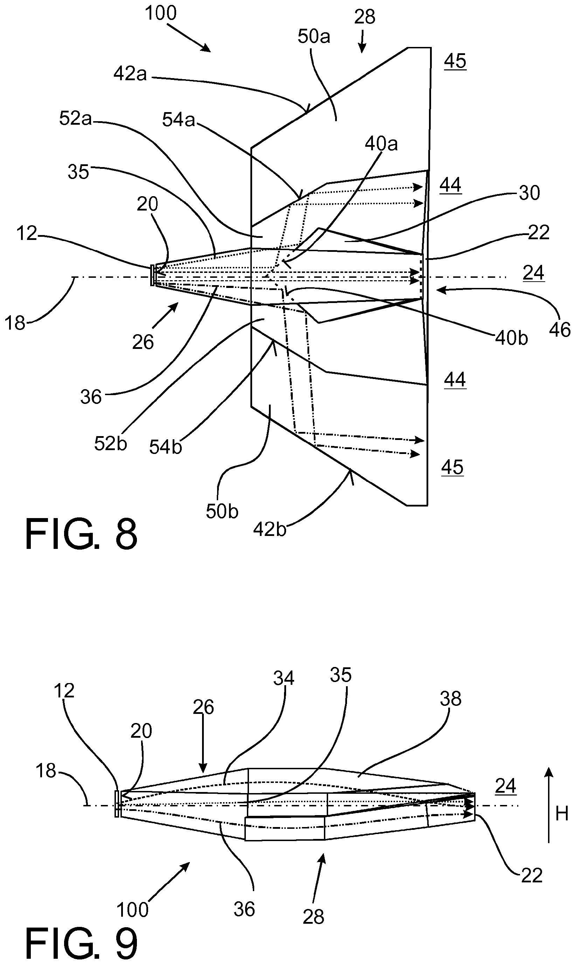

Exemplary beam paths are shown in figure 8, figure 9, including first left peripheral beam 35 shown as dotted lines (symmetrical first right peripheral beam not shown for clarity), second right peripheral beam 36 shown as slash-double-dotted lines (symmetrical second left peripheral beam not shown for clarity), and a central beam 34 shown as a dashed line.

As shown in figure 9, the central beam 34 and the first and second peripheral beams 35, 36 follow different beams paths within the TIR body 100 separated in the height direction. Light emitted from the light input surface 20 into upper directions forms the central beam 34 centrally guided along the bridge member 38 to the central portion 46 of the light output surface 22. Light emitted substantially horizontally forms the left and right first peripheral beams 35, whereas light emitted into lower directions forms the left and right second peripheral beams 36.

The peripheral beams 35, 36 are guided within the beam spreading portion 28 of the TIR body 100 as shown in figure 8. As in the previously discussed example, the shape of the beam spreading portion 28 is laterally symmetrical, so that the peripheral beams 35, 36 will divide at the front edge of the cavity 30 into left and right beam portions. In order to better illustrate the beam paths, figure 8 shows only the left portion of the first peripheral beam 35 and the right portion of the second peripheral beam 36.

The first peripheral beam 35 is divided at the front edge of the cavity 30 to be reflected at the reflective surfaces 40a, 40b into left and right lateral directions. The thus reflected light of the left and right first peripheral beams 35 is then again reflected at outside surfaces 54a, 54b of the top wing portions 52a, 52b of the beam spreading portion 28. After the second reflection, the first peripheral beams 35 are again substantially parallel to the forward direction 18 and emitted through inner peripheral portions 44 of the light output surface 22. The inner peripheral portions 44 directly border the central portion 46, such that the shaped beam 24 is emitted through the light output surface 22 continuously in the lateral directions.

As shown in Fig. 9, the second peripheral beams 36 are guided within a lower portion of the TIR body 100, such that in the height direction H the first peripheral beams 35 are arranged between the center beam 34 and the second peripheral beams 36.

The second peripheral beam portions 36 are also reflected twice, first at the front surfaces 40a, 40b of the cavity 30 and subsequently at side surfaces 42a, 42b of the wing portions 50a, 50b. A thus reflected beam 36 is directed substantially parallel to the forward direction 18 and emitted through outer peripheral portions 45 of the light output surface 22.

The outer peripheral portions 45 are arranged laterally further outward relative to the forward direction 18, such that the inner peripheral portions 44 are arranged laterally in between the center portion 46 and the outer peripheral portions 45.

The light emitted from the LED 12 is spread out broadly in both lateral directions. The spread beam 24 is composed of contributions from the central beam 34 emitted at the center portion 46, the left and right first peripheral beams 35 emitted at inner peripheral portions 44 of the light emitting surface 22, and the left and right second peripheral beams 36 emitted at outer peripheral portions 45. The TIR body 100 is shaped such that all of the light output surface 22 is illuminated, i.e. the shaped beam 24 is continuous in the lateral direction.

As explained, the spread of the beam 24 as compared to the light emitting surface of the LED 12 is achieved by separating different beam portions in the input collimator 26 by their height direction, i.e. by their angle of inclination relative to the forward direction 18 and guiding the respective beam portions 34, 35, 36 along the described beam paths towards the light output surface 22. As shown in figure 9, the different beam portions 34, 35, 36 converge again in the height direction H towards the light output surface 22. Thus, the output beam 24 may have the same height dimension as the light output surface of the LED 12, or may be only slightly larger in the height direction H.

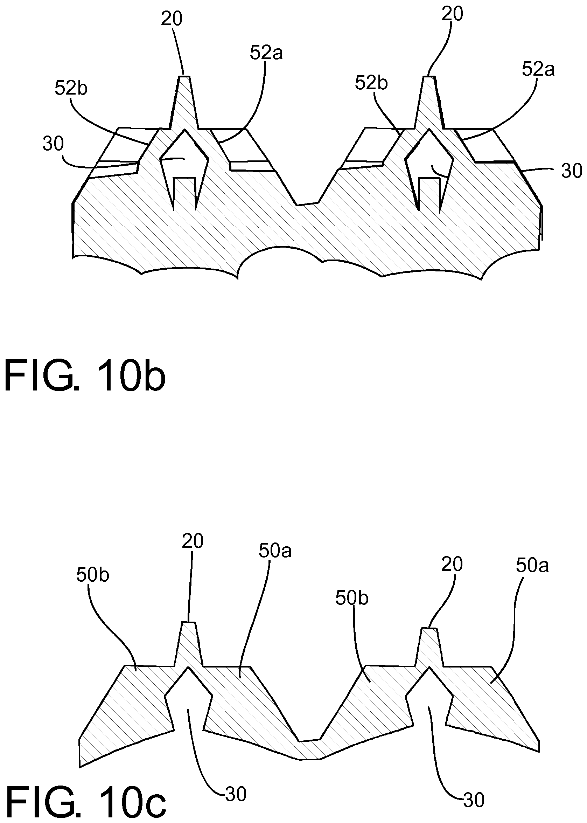

Figure 10 shows a third embodiment of the TIR body 110. The TIR body 110 corresponds in shape to two of the TIR bodies 100 described above arranged side by side. Similar or comparable parts will be designated by like reference numerals.

Each of the halves of TIR body 110 comprises an input collimator 26 and beam spreading portions 28 with wing portions 50a, 50b, top wing portions 52a, 52b, and bridge portions 38. Light output surfaces 22 are formed at concave lens adaptation portions 32.

The TIR body 110 may be used in a vehicle headlamp with two separate LED light sources arranged in front of the light input surfaces 20. Two separate lenses, or a double lens, may be arranged in front of the light output surfaces 22.

Figure 10a shows a longitudinal sectional view of the sectional plane corresponding to the plane A in figure 10. The relative arrangement of the input collimator 26, the cavity 30 with one front surface 40a and the bridge member 38 above are shown. As further visible, the lens adaptation portion 32 widens in height direction H towards the output surface 22.

Figure 10b, 10c show sectional view of the sectional planes B, C in figure 10, showing the shape of the wing portions 50a, 50b and top wing portions 52a, 52b.

The light output surface 22 of the TIR body 110 is shown in the front view of figure 11. It is bordered by upper and lower front edges 56, 58 extending laterally. The lower edge 58 is projected by a projection lens to achieve an illumination beam with a light/dark boundary. In order to conform to regulations, the lower edge 58 has a particular asymmetrical shape to achieve a light/dark boundary with a horizontal portion and an inclined portion. At the center of the light output surface 22, the lower edge 58 comprises an inclined edge portion 58b adjacent to a substantially horizontal edge portion 58a. In the projected beam, this causes the desired horizontal/inclined light/dark boundary.

It should be noted that the above-mentioned embodiments illustrate rather than limit the invention, and that those skilled in the art will be able to design many alternative embodiments without departing form the scope of the dependent claims.

For example, applying the above described concept of first separating beam portions by height or direction of inclination, and then directing the corresponding beam portions to different lateral portions of a light output surface, a skilled person will be able to propose many different shapes of a TIR body. In particular, the relative dimensions of the light input and light output surface of the TIR body may differ. For example, the height of the light output surface of the TIR body may be even less than the height of the light input surface.

While the described embodiments show symmetrical arrangements, it is also possible to provide laterally non-symmetrical lighting arrangements. The input beam may be divided in the height direction into two, three, or more different beam portions.

In the claims, any reference signs place between parentheses shall not be construed as limiting the claim. The word "comprising" does not exclude the presence of elements or steps other than those listed in the claim. The word "a" or "an" preceding an element does not exclude the presence of a plurality of such elements. The mere fact that certain measures are recited in mutually different dependent claims does not indicate that a combination of these measures cannot be used to advantage.

## Claims

1. Lighting arrangement including
a light source (12) with a light emitting surface, and
at least one beam shaping arrangement (10, 100, 110) including
- a light input portion (20) for receiving light emitted from said light source (12), wherein the light input portion (20) is a light input surface corresponding to the size of the light emitting surface of the light source (12),
- a light output portion (22) for emitting a shaped beam (24), said light output portion (22) being spaced from said light input portion (20) and comprising a central output portion (46) and a peripheral output portion (44a, 44b, 44, 45), the peripheral output portion being laterally outward relative to the central portion (46), and
- a transparent body including reflection surfaces (40a, 40b, 42a, 42b, 54a, 54b) configured such that light is reflected due to total internal reflection.
wherein a forward direction (18) is defined from the light input portion into the direction of the light output portion, with the forward direction arranged substantially horizontally,
wherein said beam shaping arrangement (10, 100, 110) is disposed such that
- light from said light input portion (20) is divided into at least a first and a second beam portion (34, 35, 36) separated in a height direction (H) relative to the forward direction,
- said first beam portion is a center beam (34), which is directed to the central portion (46) of said light output portion (22),
- said second beam portion is a peripheral beam (36), which is relative to the first beam portion directed further outward to the peripheral portion (44a, 44b, 44, 45) of said light output portion (22), and
- the first and second beam portions (34, 36) are led to converge in said height direction (H) towards said light output portion (22),
wherein said transparent body (10, 100, 110) includes at least one central cavity (30),
wherein the central cavity (30) forms reflection surfaces (40a, 40b) to separate the different beam portions (34, 35, 36) and wherein the reflection surfaces (40a, 40b) are arranged to laterally deflect beam portions (35, 36) into the lateral directions.

2. Lighting arrangement according to claim 1, wherein
said peripheral portion (44a, 44b, 44, 45) is arranged at a first lateral side of said central output portion (46),
and said beam shaping arrangement (10, 100, 110) is disposed such that one or more further beam portions are directed to further peripheral portions (44a, 44b, 44, 45) of said light output portion (22) arranged at a second lateral side of said central output portion (46), said second lateral side being arranged opposite of said first lateral side.

3. Lighting arrangement according to one of the above claims, wherein
said beam shaping arrangement (100, 110) is disposed such that said first beam portion is a first peripheral beam (35), which is directed to a first peripheral portion (44) of said light output portion (22),
and said second beam portion is a second peripheral beam (36), which is directed to a second peripheral portion (45) of said light output portion (22), said second peripheral portion (45) being arranged laterally further outward relative to said first peripheral portion (44).

4. Lighting arrangement according to claim 3, wherein
said first and second peripheral portions (44, 45) are arranged at a first lateral side of a center portion (46) of said light output portion (22),
and said beam shaping arrangement (100, 110) is disposed such that further beam portions are directed to peripheral portions arranged at a second lateral side of said center portion (46), said second lateral side being arranged opposite of said first lateral side.

5. Lighting arrangement according to one of the above claims, wherein
said beam shaping arrangement (100, 110) is disposed to divide light from said light input portion (20) into at least said first beam portion (34), said second beam portion (35), and a third beam portion (36), said first, second and third beam portion (34, 35, 36) being separated in a height direction (H),
said beam shaping arrangement (100, 110) being disposed such that said first beam portion is a center beam (34), which is directed to a center portion (46) of said light output portion (22), and
said second beam portion is a first peripheral beam (35), which is directed to a first peripheral portion (44) of said light output portion (22), and
said third beam portion is a second peripheral beam (36), which is directed to a second peripheral portion (45) of said light output portion (22), said second peripheral portion (45) being arranged laterally further outward relative to said first peripheral portion (44).

6. Lighting arrangement according to claim 5, wherein
said first and second peripheral portions (44, 45) are arranged on a first lateral side of said central output portion (46),
and said beam shaping arrangement (100, 110) is disposed such that one or more further beam portions are directed to peripheral portions arranged at a second lateral side of said cental output portion (46), said second lateral side being arranged opposite to said first lateral side.

7. Lighting arrangement according to one of the above claims, wherein
said beam shaping arrangement (100, 110) includes at least one lateral reflection surface (40a, 40b) to reflect at least one of said beam portions (34, 35, 36) into a lateral direction.

8. Lighting arrangement according to claim 7, wherein
said beam shaping arrangement (10, 100, 110) includes at least a first and a second lateral reflection surface (40a, 40b, 42a, 42b, 54a, 54b),
said first lateral reflection surface (40a, 40b) disposed to reflect at least one of said beam portions (34, 34, 36) into a lateral direction towards said second lateral reflection surface (42a, 42b, 54a, 54b),
and said second lateral reflection surface (42a, 42b, 54a, 54b) disposed to direct said beam portion (35, 36) into a direction at least substantially parallel to said forward direction (18) towards said light output portion (22).

9. Lighting arrangement according to one of the above claims, wherein
said beam shaping arrangement (10, 100, 110) is disposed such that at least one of said beam portions (34) is led to diverge from said forward direction (18) in said height direction (H) and then led to converge towards said forward direction (18) in said height direction (H).

10. Lighting arrangement according to claim 9, wherein
said beam shaping arrangement (10, 100, 110) includes a bridge member (38) extending from said light input portion (20) to said light output portion (22).

11. Lighting arrangement according to one of the above claims, wherein
said beam shaping arrangement (10, 100, 110) is disposed such that both said first and second beam portions (34, 36) are directed to be at least substantially parallel to said forward direction (18) at said light output portion (22).

12. Lighting arrangement according to one of the above claims, wherein
said beam shaping arrangement (10, 100, 110) has an extension in lateral direction (L, R) which is more than twice an extension in height direction (H).

## Patentansprüche

1. Beleuchtungsanordnung umfassend
eine Lichtquelle (12) mit einer Licht emittierenden Fläche und
mindestens eine Strahlformungsanordnung (10, 100, 110) umfassend
- einen Lichteingangsabschnitt (20) zum Empfangen von Licht, das von der Lichtquelle (12) emittiert wird, wobei der Lichteingangsabschnitt (20) eine Lichteingangsfläche ist, die zu der Größe der Licht emittierenden Fläche der Lichtquelle (12) korrespondiert,
- einen Lichtausgangsabschnitt (22) zum Emittieren eines geformten Strahls (24), wobei der Lichtausgangsabschnitt (22) von dem Lichteingangsabschnitt (20) beabstandet ist und einen zentralen Ausgangsabschnitt (46) und einen peripheren Ausgangsabschnitt (44a, 44b, 44, 45) umfasst, wobei der periphere Ausgangsabschnitt relativ zu dem zentralen Abschnitt (46) lateral nach außen verläuft, und
- einen transparenten Körper mit Reflexionsflächen (40a, 40b, 42a, 42b, 54a, 54b), die derart ausgebildet sind, dass das Licht aufgrund von interner Totalreflexion reflektiert wird.
wobei eine Vorwärtsrichtung (18) von dem Lichteingangsabschnitt in die Richtung des Lichtausgangsabschnitts definiert ist, wobei die Vorwärtsrichtung im Wesentlichen horizontal angeordnet ist,
wobei die Strahlformungsanordnung (10, 100, 110) so angeordnet ist, dass
- Licht von dem Lichteingangsabschnitt (20) in mindestens einen ersten und einen zweiten Strahlabschnitt (34, 35, 36) aufgeteilt wird, die in einer Höhenrichtung (H) relativ zur Vorwärtsrichtung getrennt sind,
- der erste Strahlabschnitt ein Mittelstrahl (34) ist, der auf den Mittelteil (46) des Lichtausgangsbereichs (22) gerichtet ist,
- der zweite Strahlabschnitt ein peripherer Strahl (36) ist, der relativ zum ersten Strahlabschnitt weiter nach außen zum peripheren Abschnitt (44a, 44b, 44, 45) des Lichtausgangsabschnitts (22) gerichtet ist, und
- der erste und der zweite Strahlabschnitt (34, 36) in der Höhenrichtung (H) zum Lichtausgangsabschnitt (22) hin konvergieren,
wobei der transparente Körper (10, 100, 110) mindestens einen zentralen Hohlraum (30) aufweist,
wobei der zentrale Hohlraum (30) Reflexionsflächen (40a, 40b) bildet, um die verschiedenen Strahlabschnitte (34, 35, 36) zu trennen, und wobei die Reflexionsflächen (40a, 40b) so angeordnet sind, dass sie Strahlabschnitte (35, 36) in die lateralen Richtungen ablenken.

2. Beleuchtungsanordnung nach Anspruch 1, wobei
der periphere Abschnitt (44a, 44b, 44, 45) an einer ersten lateralen Seite des zentralen Ausgangsabschnitts (46) angeordnet ist,
und die Strahlformungsanordnung (10, 100, 110) so angeordnet ist, dass ein oder mehrere weitere Strahlabschnitte auf weitere periphere Abschnitte (44a, 44b, 44, 45) des Lichtausgangsabschnitts (22) gerichtet sind, die an einer zweiten lateralen Seite des zentralen Ausgangsabschnitts (46) angeordnet sind, wobei die zweite laterale Seite gegenüber der ersten lateralen Seite angeordnet ist.

3. Beleuchtungsanordnung nach einem der vorstehenden Ansprüche, **dadurch gekennzeichnet, dass**
die Strahlformungsanordnung (100, 110) so angeordnet ist, dass der erste Strahlabschnitt ein erster peripherer Strahl (35) ist, der auf einen ersten peripheren Teil (44) des Lichtausgangsbereichs (22) gerichtet ist,
und der zweite Strahlabschnitt ein zweiter peripherer Strahl (36) ist, der auf einen zweiten peripheren Abschnitt (45) des Lichtausgangsabschnitts (22) gerichtet ist, wobei der zweite periphere Abschnitt (45) lateral weiter außen relativ zu dem ersten peripheren Abschnitt (44) angeordnet ist.

4. Beleuchtungsanordnung nach Anspruch 3, wobei
die ersten und zweiten peripheren Abschnitte (44, 45) an einer ersten lateralen Seite eines Mittelabschnitts (46) des Lichtausgangsabschnitts (22) angeordnet sind,
und die Strahlformungsanordnung (100, 110) so angeordnet ist, dass weitere Strahlabschnitte auf periphere Abschnitte gerichtet sind, die an einer zweiten lateralen Seite des Mittelabschnitts (46) angeordnet sind, wobei die zweite laterale Seite gegenüber der ersten lateralen Seite angeordnet ist.

5. Beleuchtungsanordnung nach einem der vorstehenden Ansprüche, **dadurch gekennzeichnet, dass**
die Strahlformungsanordnung (100, 110) so angeordnet ist, dass sie Licht von dem Lichteingangsabschnitt (20) in mindestens den ersten Strahlabschnitt (34), den zweiten Strahlabschnitt (35) und einen dritten Strahlabschnitt (36) aufteilt, wobei der erste, zweite und dritte Strahlabschnitt (34, 35, 36) in einer Höhenrichtung (H) getrennt sind,
wobei die Strahlformungsanordnung (100, 110) so angeordnet ist, dass der erste Strahlabschnitt ein Mittelstrahl (34) ist, der auf einen Mittelabschnitt (46) des Lichtausgangsabschnitts (22) gerichtet ist, und
der zweite Strahlabschnitt ein erster peripherer Strahl (35) ist, der auf einen ersten peripheren Abschnitt (44) des Lichtausgangsabschnitts (22) gerichtet ist, und
der dritte Strahlabschnitt ein zweiter peripherer Strahl (36) ist, der auf einen zweiten peripheren Abschnitt (45) des Lichtausgangsabschnitts (22) gerichtet ist, wobei der zweite periphere Abschnitt (45) lateral weiter außen relativ zu dem ersten peripheren Abschnitt (44) angeordnet ist.

6. Beleuchtungsanordnung nach Anspruch 5, wobei
die ersten und zweiten peripheren Abschnitte (44, 45) an einer ersten lateralen Seite des zentralen Ausgangsabschnitts (46) angeordnet sind,
und die Strahlformungsanordnung (100, 110) so angeordnet ist, dass ein oder mehrere weitere Strahlabschnitte auf periphere Abschnitte gerichtet sind, die an einer zweiten lateralen Seite des zentralen Ausgangsabschnitts (46) angeordnet sind, wobei die zweite laterale Seite gegenüber der ersten lateralen Seite angeordnet ist.

7. Beleuchtungsanordnung nach einem der vorstehenden Ansprüche, **dadurch gekennzeichnet, dass**
die Strahlformungsanordnung (100, 110) mindestens eine laterale Reflexionsfläche (40a, 40b) enthält, um mindestens einen der Strahlabschnitte (34, 35, 36) in eine laterale Richtung zu reflektieren.

8. Beleuchtungsanordnung nach Anspruch 7, wobei
die Strahlformungsanordnung (10, 100, 110) mindestens eine erste und eine zweite laterale Reflexionsfläche (40a, 40b, 42a, 42b, 54a, 54b) aufweist,
wobei die erste laterale Reflexionsfläche (40a, 40b) so angeordnet ist, dass sie mindestens einen der Strahlabschnitte (34, 34, 36) in eine laterale Richtung zur zweiten lateralen Reflexionsfläche (42a, 42b, 54a, 54b) reflektiert,
und wobei die zweite laterale Reflexionsfläche (42a, 42b, 54a, 54b) so angeordnet ist, dass sie den Strahlenabschnitt (35, 36) in eine Richtung lenkt, die zumindest im Wesentlichen parallel zu der Vorwärtsrichtung (18) zu dem Lichtausgangsabschnitt (22) verläuft.

9. Beleuchtungsanordnung nach einem der vorstehenden Ansprüche, **dadurch gekennzeichnet, dass**
die Strahlformungsanordnung (10, 100, 110) so angeordnet ist, dass mindestens einer der Strahlabschnitte (34) so geführt wird, dass er von der Vorwärtsrichtung (18) in der Höhenrichtung (H) divergiert und dann so geführt wird, dass er in der Höhenrichtung (H) in Richtung der Vorwärtsrichtung (18) konvergiert.

10. Beleuchtungsanordnung nach Anspruch 9, wobei
die Strahlformungsanordnung (10, 100, 110) ein Brückenelement (38) enthält, das sich von dem Lichteingangsabschnitt (20) zu dem Lichtausgangsabschnitt (22) erstreckt.

11. Beleuchtungsanordnung nach einem der vorstehenden Ansprüche, **dadurch gekennzeichnet, dass**
die Strahlformungsanordnung (10, 100, 110) so angeordnet ist, dass sowohl der erste als auch der zweite Strahlabschnitt (34, 36) so ausgerichtet sind, dass sie zumindest im Wesentlichen parallel zu der Vorwärtsrichtung (18) an dem Lichtausgangsabschnitt (22) sind.

12. Beleuchtungsanordnung nach einem der vorstehenden Ansprüche, **dadurch gekennzeichnet, dass**
die Strahlformungsanordnung (10, 100, 110) eine Ausdehnung in lateraler Richtung (L, R) hat, die mehr als das Doppelte einer Ausdehnung in Höhenrichtung (H) beträgt.

## Revendications

1. Dispositif d'éclairage comprenant
une source de lumière (12) avec une surface d'émission de lumière, et
au moins un dispositif de mise en forme du faisceau (10, 100, 110) comprenant
- une partie d'entrée de lumière (20) pour recevoir la lumière émise par ladite source de lumière (12), dans laquelle la partie d'entrée de lumière (20) est une surface d'entrée de lumière correspondant à la taille de la surface d'émission de lumière de la source de lumière (12),
- une partie de sortie de lumière (22) pour émettre un faisceau formé (24), ladite partie de sortie de lumière (22) étant espacée de ladite partie d'entrée de lumière (20) et comprenant une partie de sortie centrale (46) et une partie de sortie périphérique (44a, 44b, 44, 45), la partie de sortie périphérique étant latéralement extérieure par rapport à la partie centrale (46), et
- un corps transparent comprenant des surfaces de réflexion (40a, 40b, 42a, 42b, 54a, 54b) configurées de manière à ce que la lumière soit réfléchie en raison d'une réflexion interne totale.
dans lequel une direction avant (18) est définie à partir de la partie d'entrée de la lumière dans la direction de la partie de sortie de la lumière, la direction avant étant disposée sensiblement horizontalement,
dans lequel ledit dispositif de mise en forme du faisceau (10, 100, 110) est disposé de telle sorte que
- la lumière provenant de ladite partie d'entrée de lumière (20) est divisée en au moins une première et une seconde partie de faisceau (34, 35, 36) séparées dans une direction de hauteur (H) par rapport à la direction avant,
- cette première partie du faisceau est un faisceau central (34), qui est dirigé vers la partie centrale (46) de ladite partie de sortie de la lumière (22),
- ladite deuxième partie du faisceau est un faisceau périphérique (36) qui, par rapport à la première partie du faisceau, est dirigé davantage vers l'extérieur de la partie périphérique (44a, 44b, 44, 45) de ladite partie de sortie de la lumière (22), et
- les première et deuxième portions de faisceau (34, 36) sont amenées à converger dans ladite direction de hauteur (H) vers ladite portion de sortie de lumière (22), dans lequel ledit corps transparent (10, 100, 110) comprend au moins une cavité centrale (30),
la cavité centrale (30) forme des surfaces de réflexion (40a, 40b) pour séparer les différentes parties du faisceau (34, 35, 36) et les surfaces de réflexion (40a, 40b) sont disposées de manière à dévier latéralement les parties du faisceau (35, 36) dans les directions latérales.

2. Dispositif d'éclairage selon la revendication 1, dans lequel
ladite partie périphérique (44a, 44b, 44, 45) est disposée sur un premier côté latéral de ladite partie centrale de sortie (46),
et ledit dispositif de mise en forme du faisceau (10, 100, 110) est disposé de manière à ce qu'une ou plusieurs autres parties du faisceau soient dirigées vers d'autres parties périphériques (44a, 44b, 44, 45) de ladite partie de sortie de la lumière (22) disposée sur un deuxième côté latéral de ladite partie de sortie centrale (46), ledit deuxième côté latéral étant disposé à l'opposé dudit premier côté latéral.

3. Dispositif d'éclairage selon l'une des revendications précédentes, dans lequel
ledit dispositif de mise en forme du faisceau (100, 110) est disposé de telle sorte que ladite première partie du faisceau est un premier faisceau périphérique (35), qui est dirigé vers une première partie périphérique (44) de ladite partie de sortie de la lumière (22),
et ladite deuxième partie du faisceau est un deuxième faisceau périphérique (36), qui est dirigé vers une deuxième partie périphérique (45) de ladite partie de sortie de la lumière (22), ladite deuxième partie périphérique (45) étant disposée latéralement plus à l'extérieur par rapport à ladite première partie périphérique (44).

4. Dispositif d'éclairage selon la revendication 3, dans lequel
lesdites première et deuxième parties périphériques (44, 45) sont disposées sur un premier côté latéral d'une partie centrale (46) de ladite partie de sortie de la lumière (22),
et ledit dispositif de mise en forme du faisceau (100, 110) est disposé de telle sorte que d'autres parties du faisceau sont dirigées vers des parties périphériques disposées sur un deuxième côté latéral de ladite partie centrale (46), ledit deuxième côté latéral étant disposé à l'opposé dudit premier côté latéral.

5. Dispositif d'éclairage selon l'une des revendications précédentes, dans lequel
ledit dispositif de mise en forme du faisceau (100, 110) est conçu pour diviser la lumière provenant de ladite partie d'entrée de lumière (20) en au moins ladite première partie de faisceau (34), ladite deuxième partie de faisceau (35) et une troisième partie de faisceau (36), lesdites première, deuxième et troisième parties de faisceau (34, 35, 36) étant séparées dans une direction de hauteur (H),
ledit dispositif de mise en forme de faisceau (100, 110) est disposé de telle sorte que ladite première partie de faisceau est un faisceau central (34), qui est dirigé vers une partie centrale (46) de ladite partie de sortie de lumière (22), et
ladite deuxième partie du faisceau est un premier faisceau périphérique (35), qui est dirigé vers une première partie périphérique (44) de ladite partie de sortie de la lumière (22), et
cette troisième partie du faisceau est un deuxième faisceau périphérique (36), qui est dirigé vers une deuxième partie périphérique (45) de ladite partie de sortie de la lumière (22), cette deuxième partie périphérique (45) étant disposée latéralement plus à l'extérieur par rapport à ladite première partie périphérique (44).

6. Dispositif d'éclairage selon la revendication 5, dans lequel
lesdites première et deuxième parties périphériques (44, 45) sont disposées sur un premier côté latéral de ladite partie centrale de sortie (46),
et ledit dispositif de mise en forme du faisceau (100, 110) est disposé de manière à ce qu'une ou plusieurs autres parties du faisceau soient dirigées vers des parties périphériques disposées sur un deuxième côté latéral de ladite partie centrale de sortie (46), ledit deuxième côté latéral étant disposé à l'opposé dudit premier côté latéral.

7. Dispositif d'éclairage selon l'une des revendications précédentes, dans lequel
ledit dispositif de mise en forme du faisceau (100, 110) comprend au moins une surface de réflexion latérale (40a, 40b) pour réfléchir au moins l'une desdites portions de faisceau (34, 35, 36) dans une direction latérale.

8. Dispositif d'éclairage selon la revendication 7, dans lequel
ledit dispositif de mise en forme du faisceau (10, 100, 110) comprend au moins une première et une deuxième surface de réflexion latérale (40a, 40b, 42a, 42b, 54a, 54b),
ladite première surface de réflexion latérale (40a, 40b) disposée de manière à réfléchir au moins l'une des parties du faisceau (34, 34, 36) dans une direction latérale vers ladite deuxième surface de réflexion latérale (42a, 42b, 54a, 54b),
et ladite deuxième surface de réflexion latérale (42a, 42b, 54a, 54b) disposée de manière à diriger ladite partie du faisceau (35, 36) dans une direction au moins sensiblement parallèle à ladite direction avant (18) vers ladite partie de sortie de la lumière (22).

9. Dispositif d'éclairage selon l'une des revendications précédentes, dans lequel
ledit dispositif de mise en forme du faisceau (10, 100, 110) est disposé de telle sorte qu'au moins une desdites portions de faisceau (34) est amenée à diverger de ladite direction avant (18) dans ladite direction de hauteur (H) et est ensuite amenée à converger vers ladite direction avant (18) dans ladite direction de hauteur (H).

10. Dispositif d'éclairage selon la revendication 9, dans lequel
ledit dispositif de mise en forme du faisceau (10, 100, 110) comprend un élément de pont (38) s'étendant de ladite partie d'entrée de lumière (20) à ladite partie de sortie de lumière (22).

11. Dispositif d'éclairage selon l'une des revendications précédentes, dans lequel
ledit dispositif de mise en forme du faisceau (10, 100, 110) est disposé de telle sorte que lesdites première et seconde portions de faisceau (34, 36) sont dirigées de manière à être au moins sensiblement parallèles à ladite direction avant (18) au niveau de ladite portion de sortie de la lumière (22).

12. Dispositif d'éclairage selon l'une des revendications précédentes, dans lequel
ledit dispositif de mise en forme du faisceau (10, 100, 110) a une extension dans la direction latérale (L, R) qui est plus de deux fois supérieure à l'extension dans la direction de la hauteur (H).
